# EUROPEAN PATENT SPECIFICATION

(11) **EP 4 453 138 B1**
(45) Date of publication and mention of the grant of the patent: **02.07.2025**
(21) Application number: 22835360.3
(22) Date of filing: 12.12.2022
(51) Int. Cl.: C10G 1/10, C10G 1/00, C10G 9/00, C10B 55/02, C10B 57/08, C10B 57/04

(54) **PROCESS FOR CONVERSION OF WASTE PLASTICS INTO CHEMICALS**
VERFAHREN ZUR UMWANDLUNG VON KUNSTSTOFFABFÄLLEN IN CHEMIKALIEN
PROCÉDÉ DE CONVERSION DE DÉCHETS PLASTIQUES EN PRODUITS CHIMIQUES

(30) Priority: 20.12.2021 EP 21216043
(43) Date of publication of application: 30.10.2024
(73) Proprietor: SABIC Global Technologies B.V., 4612 PX Bergen op Zoom (NL)
(72) Inventor: SCHUCKER, Robert C., 6160 GA Geleen (NL); FARMER, Dustin, 6160 GA Geleen (NL); LOILAND, Jason, 6160 GA Geleen (NL)
(74) Representative: Sabic Intellectual Property Group
(86) International application number: PCT/EP2022/085301
(87) International publication number: WO 2023/117516

(56) References cited:
- WO-A1-2021/091724
- WO-A1-2021/204818
- WO-A1-95/14069
- GB-A- 2 024 245
- US-A1- 2019 270 939

## Description

The present invention relates to a process for conversion of waste plastics into chemicals. In particular, the invention relates to a process involving dechlorination of the plastics, and conversion of thereof into chemicals via a coking process.

WO 2021/204818 A1 relates to a process for converting pyrolysis plastic oil plastic into high value chemical via catalytic cracking of the olefinic fraction and of the paraffinic fraction of the pyrolysis plastic oil. WO 2021/091724 A1 relates to methods for performing fluidized coking on feed comprising plastic waste.

To the background of the present global developments to reduce energy and material footprint in amongst others the manufacturing of materials such as polymers and chemicals, there is a clear driver to seek reduction of energy and raw materials that are used in manufacturing of such materials. Particularly, there is a driver to enhance circularity of use of materials, after having arrived at end-of-life for a certain application, thereby reducing the use of virgin raw materials in the manufacturing of polymers and chemicals, which typically are fossil-feed based raw materials, obtained from crude oil or natural gas feedstocks. By increasing the circularity, the use of virgin raw materials is reduced, and thereby the materials footprint associated with the manufacturing of polymers and chemicals.

A promising way of increasing the circularity is by re-using end-of-life plastics, collected and made available as waste plastics streams. Such waste plastics streams can be obtained from consumer waste collection, from industrial waste collection, or by collection of waste as littered in the environment, either as aquatic littering or as land-based littering. Typically, such waste plastics streams are mixtures of various types and qualities of plastics. Through sorting, certain streams may be obtained that qualify for re-use as thermoplastics, either by directly subjecting them to thermal shaping processes or via blending them with high-quality virgin-type plastic materials to compensate for loss of properties. Such way of re-use of material however is only appropriate for a limited fraction of waste plastics that can be sorted out of the mixed waste streams as provided from waste collection so that the obtained stream has high uniformity of material composition.

Still, typically a significant portion of the waste plastics as provided by collection, if not a major portion, is not suitable for such direct re-use as polymer. Such mixed plastic waste commonly is discarded of by processes like waste incineration. In order to increase material circularity, there is a desire to develop alternative processing methods for such mixed waste plastic streams. One route for doing so is by means of chemical recycling, wherein the polymer materials that constitute the waste plastics streams are depolymerised to provide hydrocarbon materials that, directly or indirectly, can by once again be converted into polymers through polymerisation processes.

Such chemical conversion processes provide certain benefits, amongst others in that they may be operated using waste plastic compositions of varying nature, including waste plastic compositions that show particularly large variation in batch-to-batch composition.

It is particularly desirable for one to be able to utilise existing chemical conversion process technologies for the purpose of converting waste plastic streams into valuable hydrocarbon materials. Therefore, where a technology would be made available via which existing petrochemical assets would be rendered suitable for use in conversion of waste plastics streams into hydrocarbons, such would be broadly desirable.

One such opportunity now is presented by certain refinery assets. In view of reduced hydrocarbon consumption for energy and transport, which is a current and expectedly further developing trend, a certain fraction of the ubiquitously present refinery assets may well become underutilised or even idled, and therefore available for alternative uses. One such use may well be the conversion of waste plastics into hydrocarbons that can serve as feedstocks for making chemical and/or polymer products, thereby creating a circular economy of plastics materials and reducing the material footprint.

Certain ubiquitously available sources of waste plastics include post-consumer waste streams and post-industrial waste streams. Such streams comprise collected plastics discarded by common household use or industrial use. As in typical household use, the plastics that end up forming a waste are of very different origin and nature, and thereby of varying constitution, the stream of waste plastics collected from household use is typically a mixed waste plastic stream. It typically contains plastics of different types of chemical constitution, amongst which exemplary species include polyolefins such as polyethylenes and polypropylenes, polystyrenes, polyvinyl chlorides, and polyesters, to name only some. Furthermore, one may expect quite some batch-to-batch variation in composition of batches of collected post-consumer or post-industrial mixed plastics waste.

The mixed nature of such waste plastics streams, and the variations in batch-to-batch composition, pose certain challenges in terms of processability of the post-consumer mixed waste plastics. Many of the technologies that are available or being developed that target processing of mixed waste plastics into materials that can be re-used for purposes typical to plastic materials do provide certain product quality requirements for a batch of waste plastics to comply with in order to suitably serve as raw materials for conversion via such technologies.

One of the quality requirements is that the quantity of certain impurities must be below a certain level. A particular impurity whose presence in waste plastics is typically required to be low is chlorine atoms. During various processing steps of waste plastics, which may constitute either mechanical conversion steps or chemical conversion steps, chlorine atoms tend to detrimentally affect the processes and the equipment in which those processes are operated. A well-known issue associated with the presence of chlorine is corrosion of metals which are present in the operating equipment. Furthermore, when subjected to catalysed chemical conversion processes, the presence of chlorine may interfere with the catalytic activity of the used catalysts. Accordingly, most refinery and chemical operations have a limit to the amount of chlorine that can be contained in their feeds, a.o. because one of the byproducts from downstream processing is hydrogen chloride (HCl), which is very corrosive and can cause severe damage to a.o. metal parts, especially when water vapour is present.

In waste plastics streams, the chlorine atoms that may be present in it particularly originate from the presence of polyvinyl chloride plastics (PVC) in the waste plastic stream. PVC is a polymer product having many attractive properties, and is used ubiquitously and for a wide variety of applications. Accordingly, a waste plastics stream may comprise a certain quantity of chlorine atoms originating from PVC.

A particular route for processing waste plastics is by converting these plastics into chemical product streams that can again be used as building blocks to produce new chemical and/or polymer products of exactly the same quality as the products they originated from, which may be done by processing the waste plastics via certain refinery assets. For the waste plastic materials to be suitable for use in conversion reactions via such refinery assets, it is required that they comply with a certain composition specification. One aspect of such specification is the quantity of chlorine atoms that is present in the composition. Many refinery assets have strict limitations regarding the specifications of the feed streams that can be processed, in order to safeguard the process continuity and efficiency, and the longevity of the facilities. The presence of chlorine atoms acts to the detriment of these requirements. As it is a driver at the present day to arrive at ways to enable utilisation of waste plastics-based feedstocks in existing facilities, the ability to meet the feedstock specifications of these facilities is paramount.

It will therefore be understood that there is a desire for having available a process whereby the quantity of chlorine in waste plastics feeds is reduced. Such process would render waste plastics feeds more convenient to process in refinery and chemical facilities. This is now provided by the present invention by a process for the conversion of plastics to chemicals comprising in this order the steps of:
(i) providing a plastics stream (A) comprising polyvinyl chloride (PVC);
(ii) supplying the plastics stream (A) and a solvent (S) to a reactor vessel (1);
(iii) subjecting the plastics in the reactor vessel to a temperature of ≥ 250°C to < 350, preferably of ≥ 275°C and ≤ 325°C, preferably for a period of 5-30 minutes, under applying a vacuum, preferably of ≤ 200 mbar, or using an inert gas sweep, and evacuating the generated hydrogen chloride (B) from the vessel, wherein the PVC is partially dechlorinated to form a plastics stream (C) comprising partially unsaturated PVC;
(iv) removing the plastics stream (C) comprising partially unsaturated PVC from the reaction vessel;
(v) separating in a separation system (2) at least a part of the partially unsaturated PVC from the plastics stream to form a dechlorinated plastics stream (D) comprising the solvent;
(vi) supplying the stream (D) comprising the solvent and the dechlorinated plastics to a solvent recovery system to recover the solvent and obtain a dechlorinated plastics stream (E);
(vii) mixing the stream (E) with a recycle stream from a coker (K) to form a pre-feed stream (F);
(viii) mixing the stream (F) with a coker feed (G) to product a feed stream (H) that meets the chlorine specifications for a coker unit (4); and
(ix) subjecting the coker unit (4) to such conditions to obtain a liquid coker stream (I) and a solid coke product (L).

Such process allows for the conversion of plastic compositions comprising PVC into chemical products that are suitable for renewed use as raw materials in for example the production of high-quality polymer materials, thereby contributing to improvement of circular use of plastic materials.

The plastics stream (A) may for example comprise ≤ 10.0 wt%, preferably ≥ 0.001 and ≤ 10.0 wt% of PVC, more preferably ≥ 0.5 and ≤ 10.0 wt%, even more preferably ≥ 0.5 and ≤ 5.0 wt%, with regard to the total weight of the plastics stream.

In the reactor vessel in step (iii), the plastics may for example be present in a molten state, as a slurry, or as a solution.

The step (ii) may for example involve passing the plastics stream (A) via a melt extruder, preferably a single-screw melt extruder, operating at a temperature of ≤ 250 °C, preferably of ≥ 180°C and ≤ 225°C, to obtain a molten plastics stream, and supplying the molten plastics stream to a mixer wherein the stream is mixed with solvent (S), and subsequently fed to the reactor vessel. The molten plastics stream exiting the melt extruder may, prior to being supplied to the reactor vessel, be further heated to a temperature of for example ≥ 250°C and ≤ 300°C. The heating preferably is performed using a hot oil system.

Alternatively, the step (ii) may involve passing a mixture comprising a quantity of the plastics stream (A) and vacuum gas oil via a high shear mixer at a temperature of 200-220°C to obtain a suspension, and supplying this suspension to the reactor vessel. The mixture may for example comprise ≥ 10.0 and ≤ 90.0 wt% of the plastics stream (A), preferably ≥ 10.0 and ≤ 50.0 wt%, more preferably ≥ 10.0 and ≤ 30.0 wt%.

The separation step (v) is performed by passing the plastics stream (C) comprising partially unsaturated PVC that is removed from the reaction vessel over a filter system in a state that the partially unsaturated PVC is present in the waste plastics stream in solid form, so that a dechlorinated plastics stream (D) and a solid partially unsaturated PVC stream (J) is obtained. Preferably, the filter system has an average pore size of ≤ 25 µm. Also preferably, the step (v) is performed at a temperature of ≥ 200°C. In step (v), the separation results in that at least a part of the partially unsaturated PVC is removed from the plastics stream (C). For example, in step (v), at least 50.0 wt% of the partially unsaturated PVC that is present in stream (C) is removed, preferably at least 70.0 wt%, more preferably at least 90.0 wt%. Even more preferably, the partially unsaturated PVC that is present in stream (C) is removed in step (v).

The evacuated HCl stream (B) may in certain embodiments be subjected to a caustic treatment to complex HCl with NaOH to obtain NaCl. The evacuated HCl-containing stream (B) may in certain embodiment, immediately upon exiting the reactor vessel, be passed through a condenser to remove solvent, which subsequently is returned into the reactor.

It is preferred that the stream (H) comprises ≥ 0.1 and ≤ 10.0 wt%, preferably ≥ 1.0 and ≤ 5.0 wt%, more preferably ≥ 1.0 and ≤ 2.0 wt%, of plastics, with regard to the total weight of stream (E).

In a certain embodiment, the stream that is subjected to step (v) may comprise ≥ 10.0 and ≤ 99.9 wt%, preferably ≥ 20.0 and ≤ 99.0 wt%, more preferably ≥ 50.0 and ≤ 99.0 wt%, of vacuum gas oil, with regard to the total weight of the stream.

The process according to the present invention preferably is a continuously operating process. It is preferred that the reactor vessel is equipped with an inert gas purge.

The coker unit (4)may for example comprise a furnace (5) and one or more coke drum(s) (6) configured so that the stream (H) is supplied to the furnace, the product stream from the furnace (M) is supplied to a coke drum, and a liquid coker stream (I) and a solid coke product (L) are obtained from the coke drum. The stream (H) may for example be supplied at a temperature of ≥ 300 and ≤ 450°C. The stream (H) may for example be heated in the furnace by passing the feed through heating tubes and subjecting it to external heat energy to obtain a furnace product stream (M) having a temperature of ≥ 450°C and ≤ 550°C, preferably of ≥ 475°C and ≤ 500°C.

The vacuum gas oil may for example have an initial boiling point of ≥ 250°C and a final boiling point of ≤ 600 °C.

The furnace (5) that may be used in the process according to the present invention may for example be a furnace in which multiple feed tubes are passed through a heating chamber, also referred to as a firebox, so that the feed is heated by external heating. The tubes may be passed through the firebox multiple times, for example two or four times. The heat may for example be provided by burners placed below the tubes. The burners may be controlled in such way to provide the required heating of the feed in the tubes to obtain the desired temperature of the feed exiting the furnace. In order to ensure that the coke formation of the feed does not occur in the furnace tubes, but is delayed until the feed materials reach the coke drum, the mass velocity of the feed through the furnace is preferably greater than 1800 kg/s/m². A quantity of steam may be added to the feed tubes, such as for example between 0.1 and 2.0 wt% of steam with regard to the total weight of the feed. Such addition of steam contributes to increase of velocity in the tubes. The combined coker feed stream (H) may be heated in the furnace by passing the feed through heating tubes and subjecting it to external heat energy to obtain a furnace product stream (M) having a temperature of ≥ 450°C and ≤ 550°C, preferably of ≥ 475°C and ≤ 500°C.

The feed may exit the furnace at a temperature of preferably ≥ 450°C and ≤ 550°C, more preferably of ≥ 475°C and ≤ 500°C. Upon exiting the furnace, the heated furnace product stream (M) may be transported via a transfer line into a coke drum. It is desirable that the residence time in the transfer line is kept as short as possible, to avoid occurrence of coking prior to reaching the coke drum. Accordingly, it is desirable to keep the transfer line as short as possible. Furthermore, as typically a furnace is connected to multiple coke drums to ensure continuous operations, a switch valve may be present in the transfer line, to allow directing the feed to a desired coke drum.

A typical coke drum that may be used in the process according to the present invention may have a diameter of between 4 and 9 m., and a length of between 20 and 30 m. The drum typically is positioned vertically. The drum may be operated at a pressure of between 100 and 600 kPa, such as between 200 and 300 kPa.

A typical configuration may involve two or more, often two, coke drums, so that one drum may be in operation whilst the other drum(s) may be subjected to coke removal and cleaning before switching back in operation again. As coke is formed in the drum, the drum needs to be evacuated from time to time in a batch operation.

In the coke drum, a cracking process occurs which results in a top product that is continuously removed from the drum as liquid coker stream (I), and a bottoms product, being the coke, that is removed as solid coke product (L), typically at the end of the run. The stream (I) may be removed from the drum at a temperature of below 500°C, such as between 475°C and 500°C, to avoid coke formation in the transport line.

The process preferably is a continuously operating process. The reactor vessel may be equipped with an inert gas purge.

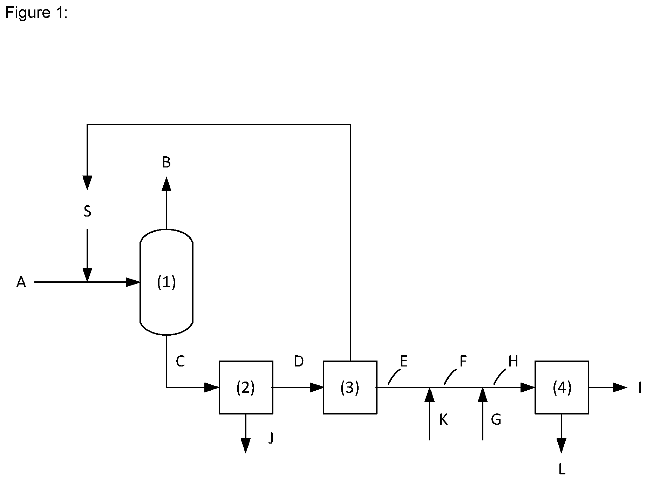

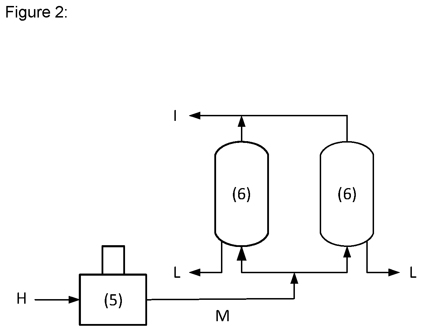

Figure 1 presents a representation of an embodiment of the process according to the invention. Figure 2 presents a representation of a particular embodiment of the coker unit (4). In each of the figures, where applicable, the numbers and letters represent:
(1) Reactor Vessel
(2) Separation System
(3) Solvent Recovery System
(4) Coker Unit
(5) Furnace
(6) Coke drum(s)

A: Plastics stream
B: Hydrogen chloride
C: Plastics stream comprising partially unsaturated PVC
D: Dechlorinated plastics stream containing solvent
E: Dechlorinated plastics stream
F: Pre-feed stream, e.g. comprising heavy coker gas oil and plastics
G: Coker feed stream
H: Feed stream comprising coker feed and plastics
I: Liquid coker product
J: Partially unsaturated PVC
K: Recycle stream from coker, e.g. heavy coker gas oil
L: Solid coke product
M: Coker furnace product

The invention will now be illustrated by the following non-limiting example.

A mixture of 4.04 g high-density polyethylene (HDPE) having a weight-average molecular weight of 72,000 g/mol and 0.20 g polyvinyl chloride (PVC) having a weight-average molecular weight of 85,000 g/mol were added to a quartz boat of approximately 90 mm long by 20 mm wide and 15 mm deep. The chlorine content of this mixture was 29,000 ppm by weight. The boat containing the polymer mixture was placed in a 1.5" (3.8 cm) tube furnace, and flushed with nitrogen to ensure that all oxygen was removed. After that, a flow of 150 cm³/min of nitrogen was established through the furnace. The furnace temperature was raised to 300°C at a rate of 5°C/min and held at 300°C for 60 minutes prior to cooling down to room temperature.

It was observed that the HDPE had melted and flowed to fill up the bottom of the boat, whereas the PVC had puffed up and turned black while essentially remaining in place. The ingot of solidified polymers that was formed upon cooling was removed from the quartz boat. The segment of the ingot containing the black PVC was broken off and supported on a piece of 16-mesh stainless steel screen which was placed atop the quartz boat. This was again placed in the tube furnace and the temperature was raised to 150°C, allowing the HDPE to melt and flow through the screen into the boat. After 60 minutes at 150°C, the furnace was cooled and the boat removed. It was observed that the HDPE had melted and fallen through the screen and collected in the bottom of the boat, whereas the black PVC was retained by the screen. The chlorine content of the collected HDPE was measured by XRF and found to be 30 ppm by weight, representing a reduction of 99.9 % from the starting mixture.

The obtained dechlorinated product was mixed with a vacuum gas oil at a ratio of 50:1 parts by weight to obtain a composition comprising 2 wt% of the dechlorinated product. This product comprised < 1ppm of chlorine, thereby forming a product suitable for processing in a coker unit.

From the above it can be observed that a process according to the present invention allows for a significant reduction of chlorine content in a mixed plastics stream. This is particularly desirable in processing of waste plastics streams, such as post-consumer mixed plastic waste streams. Such streams typically contain a fraction of chlorine-containing polymers, such as PVC, which is undesirable as presence of chlorine in plastics processing equipment can give rise to undesirable effects such as e.g. corrosion. By the process of the present invention, a solution to avoid this is provided.

## Claims

1. Process for the conversion of plastics to chemicals comprising in this order the steps of:
(i) providing a plastics stream (A) comprising polyvinyl chloride (PVC);
(ii) supplying the plastics stream (A) and a solvent (S) to a reactor vessel (1);
(iii) subjecting the plastics in the reactor vessel to a temperature of ≥ 250°C to < 350, preferably of ≥ 275°C and ≤ 325°C, preferably for a period of 5-30 minutes, under applying a vacuum, preferably of ≤ 200 mbar, or using an inert gas sweep, and evacuating the generated hydrogen chloride (B) from the vessel, wherein the PVC is partially dechlorinated to form a plastics stream (C) comprising partially unsaturated PVC;
(iv) removing the plastics stream (C) comprising partially unsaturated PVC from the reaction vessel;
(v) separating in a separation system (2) at least a part of the partially unsaturated PVC from the plastics stream to form a dechlorinated plastics stream (D) comprising the solvent;
(vi) supplying the stream (D) comprising the solvent and the dechlorinated plastics to a solvent recovery system to recover the solvent and obtain a dechlorinated plastics stream (E);
(vii) mixing the stream (E) with a recycle stream from a coker (K) to form a pre-feed stream (F);
(viii) mixing the stream (F) with a coker feed (G) to product a feed stream (H) that meets the chlorine specifications for a coker unit (4); and
(ix) subjecting the coker unit (4) to such conditions to obtain a liquid coker stream (I) and a solid coke product (L).

2. Process according to claim 1, wherein the plastics stream (A) comprises ≤ 10.0 wt% of PVC, with regard to the total weight of the plastics stream.

3. Process according to any one of claims 1-2, wherein the plastics are present in the reactor vessel in step (iii) in a molten state, as a slurry, or as a solution.

4. Process according to any one of claims 1-3, wherein the step (ii) involves passing the plastics stream (A) via a melt extruder, preferably a single-screw melt extruder, operating at a temperature of ≤ 250 °C, preferably of ≥ 180°C and ≤ 225°C, to obtain a molten plastics stream, and supplying the molten plastics stream to the reactor vessel.

5. Process according to claim 4, wherein the molten plastics stream containing solvent is, prior to being supplied to the reactor vessel, further heated to a temperature of ≥ 250°C and ≤ 300°C, preferably wherein the heating is performed using a hot oil system.

6. Process according to any one of claims 1-5, wherein the solvent (S) is a vacuum gas oil, preferably wherein the vacuum gas oil has low coke forming tendencies.

7. Process according to any one of claims 1-6, wherein the separation step (v) is performed by passing the plastics stream (C) comprising partially unsaturated PVC that is removed from the reaction vessel over a filter system in a state that the partially unsaturated PVC is present in the waste plastics stream in solid form, so that a dechlorinated plastics stream (D) and a solid partially unsaturated PVC stream (J) is obtained, preferably wherein the filter system has an average pore size of ≤ 25 µm, and preferably wherein the step (v) is performed at a temperature of ≥ 200°C.

8. Process according to any one of claims 1-7, wherein the evacuated HCl stream (B) is subjected to a caustic treatment to complex HCl with NaOH to obtain NaCl.

9. Process according to any one of claims 1-8, wherein the evacuated HCl-containing stream (B) is, immediately upon exiting the reactor vessel, passed through a condenser to remove medium, which subsequently is returned into the reactor.

10. Process according to any one of claims 1-9, wherein the stream (H) comprises ≥ 0.1 and ≤ 10.0 wt%, preferably ≥ 1.0 and ≤ 5.0 wt%, more preferably ≥ 1.0 and ≤ 2.0 wt%, of plastics, with regard to the total weight of stream (E).

11. Process according to any one of claims 1-10, wherein the coker unit comprises a furnace (5) and one or more coke drum(s) (6) configured so that the stream (H) is supplied to the furnace, the product stream from the furnace (M) is supplied to a coke drum, and a liquid coker stream (I) and a solid coke product (L) are obtained from the coke drum.

12. Process according to claim 11, wherein the stream (H) is supplied at a temperature of ≥ 300 and ≤ 450°C.

13. Process according to claim 12, wherein the stream (H) is heated in the furnace by passing the feed through heating tubes and subjecting it to external heat energy to obtain a furnace product stream (H) having a temperature of ≥ 450°C and ≤ 550°C, preferably of ≥ 475°C and ≤ 500°C.

14. Process according to any of claims 1-13, wherein the solvent (S) is a vacuum gas oil having an initial boiling point of ≥ 250°C and a final boiling point of ≤ 600°C.

15. Process according to any of claims 11-14, wherein the coke drum is operated at a pressure of between 100 and 600 kPa.

## Patentansprüche

1. Prozess zur Umwandlung von Kunststoffen in Chemikalien, umfassend in dieser Reihenfolge die folgenden Schritte:
(i) Bereitstellen eines Kunststoffstroms (A), der Polyvinylchlorid (PVC) umfasst;
(ii) Zuführen des Kunststoffstroms (A) und eines Lösungsmittels (S) in einen Reaktorbehälter (1);
(iii) Aussetzen der Kunststoffe in dem Reaktorbehälter einer Temperatur von ≥ 250 °C bis < 350, vorzugsweise von ≥ 275 °C und ≤ 325 °C, vorzugsweise über einen Zeitraum von 5-30 Minuten unter Anlegen eines Vakuums, vorzugsweise mit ≤ 200 mbar, oder Verwenden einer Inertgasspülung und Evakuieren des erzeugten Chlorwasserstoffs (B) aus dem Behälter, wobei das PVC teilweise entchlort wird, um einen Kunststoffstrom (C) zu bilden, der teilweise ungesättigtes PVC umfasst;
(iv) Entfernen des Kunststoffstroms (C), der teilweise ungesättigtes PVC umfasst, aus dem Reaktionsbehälter;
(v) Abtrennen in einem Trennsystem (2) mindestens eines Teils des teilweise ungesättigten PVC aus dem Kunststoffstrom, um einen entchlorten Kunststoffstrom (D) zu bilden, der das Lösungsmittel umfasst;
(vi) Zuführen des Stroms (D), der das Lösungsmittel und die entchlorten Kunststoffe umfasst, an ein Lösungsmittelrückgewinnungssystem, um das Lösungsmittel zurückzugewinnen und einen entchlorten Kunststoffstrom (E) zu erhalten;
(vii) Mischen des Stroms (E) mit einem Rückführstrom aus einem Verkokungsofen (K), um einen Vor-Zufuhrstrom (F) zu bilden;
(viii) Mischen des Stroms (F) mit einer Verkokungszufuhr (G), um einen Zufuhrstrom (H) zu produzieren, der die Chlorspezifikationen für eine Verkokungseinheit (4) erfüllt; und
(ix) Aussetzen der Verkokungseinheit (4) solchen Bedingungen, um einen flüssigen Verkokungsstrom (I) und ein festes Koksprodukt (L) zu erhalten.

2. Prozess nach Anspruch 1, wobei der Kunststoffstrom (A) ≤ 10,0 Gew.-% PVC, bezogen auf das Gesamtgewicht des Kunststoffstroms, umfasst.

3. Prozess nach einem der Ansprüche 1-2, wobei die Kunststoffe in dem Reaktorbehälter in Schritt (iii) in einem geschmolzenen Zustand, als eine Aufschlämmung oder als eine Lösung vorhanden sind.

4. Prozess nach einem der Ansprüche 1-3, wobei der Schritt (ii) beinhaltet, den Kunststoffstrom (A) durch einen Schmelzextruder, vorzugsweise einen Einschnecken-Schmelzextruder, zu leiten, der bei einer Temperatur von ≤ 250 °C, vorzugsweise ≥ 180 °C und ≤ 225 °C arbeitet, um einen geschmolzenen Kunststoffstrom zu erhalten, und Zuführen des geschmolzenen Kunststoffstroms in den Reaktorbehälter.

5. Prozess nach Anspruch 4, wobei der lösungsmittelhaltige geschmolzene Kunststoffstrom vor seiner Zufuhr zum Reaktorbehälter weiter auf eine Temperatur von ≥ 250 °C und ≤ 300 °C erhitzt wird, wobei das Erhitzen vorzugsweise unter Verwendung eines Heißölsystems durchgeführt wird.

6. Prozess nach einem der Ansprüche 1-5, wobei das Lösungsmittel (S) ein Vakuumgasöl ist, wobei das Vakuumgasöl vorzugsweise geringe Koksbildungstendenzen aufweist.

7. Prozess nach einem der Ansprüche 1-6, wobei der Trennschritt (v) durchgeführt wird, indem der Kunststoffstrom (C), der teilweise ungesättigtes PVC umfasst, der aus dem Reaktionsbehälter entfernt wird, über ein Filtersystem in einem Zustand geleitet wird, dass das teilweise ungesättigte PVC im Kunststoffabfallstrom in fester Form vorhanden ist, sodass ein entchlorter Kunststoffstrom (D) und ein fester, teilweise ungesättigter PVC-Strom (J) erhalten werden, wobei das Filtersystem vorzugsweise eine durchschnittliche Porengröße von ≤ 25 µm aufweist, und wobei der Schritt (v) vorzugsweise bei einer Temperatur von ≥ 200 °C durchgeführt wird.

8. Prozess nach einem der Ansprüche 1-7, wobei der evakuierte HCl-Strom (B) einer kaustischen Behandlung unterzogen wird, um HCl mit NaOH zu komplexieren, um NaCl zu erhalten.

9. Prozess nach einem der Ansprüche 1-8, wobei der evakuierte HCl-haltige Strom (B) unmittelbar bei Austritt aus dem Reaktorbehälter durch einen Kondensator geleitet wird, um Medium zu entfernen, und anschließend in den Reaktor zurückgeführt wird.

10. Prozess nach einem der Ansprüche 1-9, wobei der Strom (H) ≥ 0,1 und ≤ 10,0 Gew.- %, vorzugsweise ≥ 1,0 und ≤ 5,0 Gew.-%, bevorzugter ≥ 1,0 und ≤ 2,0 Gew.-% Kunststoffe, bezogen auf das Gesamtgewicht von Strom (E), umfasst.

11. Prozess nach einem der Ansprüche 1-10, wobei die Verkokungseinheit einen Ofen (5) und eine oder mehrere Kokstrommel(n) (6) umfasst, die so konfiguriert ist, dass der Strom (H) dem Ofen zugeführt wird, der Produktstrom aus dem Ofen (M) einer Kokstrommel zugeführt wird und ein flüssiger Verkokungsstrom (I) und ein festes Koksprodukt (L) aus der Kokstrommel erhalten werden.

12. Prozess nach Anspruch 11, wobei der Strom (H) bei einer Temperatur von ≥ 300 und ≤ 450 °C zugeführt wird.

13. Prozess nach Anspruch 12, wobei der Strom (H) im Ofen erhitzt wird, indem die Zufuhr durch Heizrohre geleitet und externer Wärmeenergie ausgesetzt wird, um einen Ofenproduktstrom (H) mit einer Temperatur von ≥ 450 °C und ≤ 550 °C, vorzugsweise ≥ 475 °C und ≤ 500 °C zu erhalten.

14. Prozess nach einem der Ansprüche 1-13, wobei das Lösungsmittel (S) ein Vakuumgasöl ist, das einen anfänglichen Siedepunkt von ≥ 250 °C und einen Endsiedepunkt von ≤ 600 °C aufweist.

15. Prozess nach einem der Ansprüche 11-14, wobei die Kokstrommel bei einem Druck von zwischen 100 und 600 kPa betrieben wird.

## Revendications

1. Processus de conversion de matières plastiques en produits chimiques comprenant dans cet ordre les étapes consistant à :
(i) fournir un flux de matières plastiques (A) comprenant du polychlorure de vinyle (PVC) ;
(ii) introduire le flux de matières plastiques (A) et un solvant (S) dans une cuve de réacteur (1) ;
(iii) soumettre les matières plastiques dans la cuve de réacteur à une température de ≥ 250 °C à < 350, de préférence de ≥ 275 °C et ≤ 325 °C, de préférence pendant une période de 5 à 30 minutes, sous application d'un vide, de préférence de ≤ 200 mbar, ou en utilisant un balayage de gaz inerte, et évacuer le chlorure d'hydrogène généré (B) de la cuve, dans lequel le PVC est partiellement déchloré pour former un flux de matières plastiques (C) comprenant du PVC partiellement insaturé ;
(iv) éliminer le flux de matières plastiques (C) comprenant du PVC partiellement insaturé de la cuve de réacteur ;
(v) séparer dans un système de séparation (2) au moins une partie du PVC partiellement insaturé du flux de matières plastiques pour former un flux de matières plastiques déchlorées (D) comprenant le solvant ;
(vi) introduire le flux (D) comprenant le solvant et les matières plastiques déchlorées dans un système de récupération de solvant pour récupérer le solvant et obtenir un flux de matières plastiques déchlorées (E) ;
(vii) mélanger le flux (E) avec un flux de recyclage provenant d'un cokeur (K) pour former un flux de pré-alimentation (F) ;
(viii) mélanger le flux (F) avec une charge de cokéfaction (G) pour produire un flux d'alimentation (H) qui satisfait aux spécifications de chlore pour une unité de cokéfaction (4) ; et
(ix) soumettre l'unité de cokéfaction (4) à de telles conditions pour obtenir un flux de cokéfaction liquide (I) et un produit de coke solide (L).

2. Processus selon la revendication 1, dans lequel le flux de matières plastiques (A) comprend ≤ 10,0 % en poids de PVC, par rapport au poids total du flux de matières plastiques.

3. Processus selon l'une quelconque des revendications 1-2, dans lequel les matières plastiques sont présentes dans la cuve de réacteur à l'étape (iii) à l'état fondu, sous forme de suspension ou sous forme de solution.

4. Processus selon l'une quelconque des revendications 1-3, dans lequel l'étape (ii) consiste à faire passer le flux de matières plastiques (A) par une extrudeuse à fusion, de préférence une extrudeuse à fusion à vis unique, fonctionnant à une température ≤ 250 °C, de préférence ≥ 180 °C et ≤ 225 °C, pour obtenir un flux de matières plastiques fondues, et à introduire le flux de matières plastiques fondues dans la cuve de réacteur.

5. Processus selon la revendication 4, dans lequel le flux de matières plastiques fondues contenant du solvant est, avant d'être introduit dans la cuve de réacteur, encore chauffé à une température ≥ 250 °C et ≤ 300 °C, de préférence dans lequel le chauffage est effectué à l'aide d'un système d'huile chaude.

6. Processus selon l'une quelconque des revendications 1-5, dans lequel le solvant (S) est un gazole sous vide, de préférence dans lequel le gazole sous vide présente de faibles tendances à la formation de coke.

7. Processus selon l'une quelconque des revendications 1-6, dans lequel l'étape de séparation (v) est réalisée en faisant passer le flux de matières plastiques (C) comprenant du PVC partiellement insaturé qui est retiré de la cuve de réacteur sur un système de filtre dans un état tel que le PVC partiellement insaturé est présent dans le flux de déchets plastiques sous forme solide, de sorte qu'un flux de matières plastiques déchlorées (D) et un flux de PVC partiellement insaturé solide (J) sont obtenus, de préférence dans lequel le système de filtre présente une taille de pores moyenne ≤ 25 µm, et de préférence dans lequel l'étape (v) est réalisée à une température ≥ 200 °C.

8. Processus selon l'une quelconque des revendications 1-7, dans lequel le flux de HCl évacué (B) est soumis à un traitement caustique pour complexer le HCl avec le NaOH pour obtenir du NaCl.

9. Processus selon l'une quelconque des revendications 1-8, dans lequel le flux contenant du HCl évacué (B) est, immédiatement après sa sortie de la cuve de réacteur, passé à travers un condenseur pour éliminer le milieu, qui est ensuite renvoyé dans le réacteur.

10. Processus selon l'une quelconque des revendications 1-9, dans lequel le flux (H) comprend ≥ 0,1 et ≤ 10,0 % en poids, de préférence ≥ 1,0 et ≤ 5,0 % en poids, plus préférentiellement ≥ 1,0 et ≤ 2,0 % en poids, de matières plastiques, par rapport au poids total du flux (E).

11. Processus selon l'une quelconque des revendications 1-10, dans lequel l'unité de cokéfaction comprend un four (5) et un ou plusieurs tambours à coke (6) configurés de telle sorte que le flux (H) est fourni au four, le flux de produit provenant du four (M) est introduit dans un tambour à coke, et un flux de cokéfaction liquide (I) et un produit de coke solide (L) sont obtenus à partir du tambour à coke.

12. Processus selon la revendication 11, dans lequel le flux (H) est fourni à une température ≥ 300 et ≤ 450 °C.

13. Processus selon la revendication 12, dans lequel le flux (H) est chauffé dans le four en faisant passer la charge à travers des tubes chauffants et en la soumettant à une énergie thermique externe pour obtenir un flux de produit de four (H) présentant une température ≥ 450 °C et ≤ 550 °C, de préférence ≥ 475 °C et ≤ 500 °C.

14. Processus selon l'une quelconque des revendications 1-13, dans lequel le solvant (S) est un gazole sous vide présentant un point d'ébullition initial ≥ 250 °C et un point d'ébullition final ≤ 600 °C.

15. Processus selon l'une quelconque des revendications 11-14, dans lequel le tambour à coke fonctionne à une pression comprise entre 100 et 600 kPa.
